**Europäisches Patentamt**

**European Patent Office**

**Office européen des brevets**

(19)

(11) Veröffentlichungsnummer : **0 074 940**
**B1**

(12) # EUROPÄISCHE PATENTSCHRIFT

(45) Veröffentlichungstag der Patentschrift :
20.02.85

(51) Int. Cl.⁴ : **H 04 M   1/72, H 04 Q   7/04**

(21) Anmeldenummer : **82890125.6**

(22) Anmeldetag : **07.09.82**

(54) **Drahtloser Telefonapparat.**

(30) Priorität : **08.09.81 AT 3879/81**

(43) Veröffentlichungstag der Anmeldung :
**23.03.83 Patentblatt 83/12**

(45) Bekanntmachung des Hinweises auf die Patenterteilung : **20.02.85 Patentblatt 85/08**

(84) Benannte Vertragsstaaten :
**BE DE GB NL SE**

(56) Entgegenhaltungen :
EP-A- 0 051 726
DE-C- 1 226 650
GB-A-   850 698
US-A- 3 173 996
US-A- 3 351 714
US-A- 4 332 981
IEEE VEHICULAR TECHNOLOGY CONFERENCE, 27.-30. März 1979, Seiten 159-162, New York, USA

(73) Patentinhaber : **PORTAPHONE AG**
**Bahnhofstrasse 16**
**CH-8808 Pfäffikon SZ (CH)**

(72) Erfinder : **Kerschbaumer, Klaus, Dipl. Ing. Dr.**
**Münzwardeingasse 4**
**A-1060 Wien (AT)**
Erfinder : **Resch, Heinz, Ing.**
**Osterleitengasse 3/1**
**A-1190 Wien (AT)**
Erfinder : **Machl, Franz, Ing.**
**Salltergasse 26/2/9**
**A-2380 Perchtoldsdorf (AT)**
Erfinder : **Ullrich, Helmut, Ing.**
**Hofgraben 13**
**A-2490 Ebenfurth (AT)**

(74) Vertreter : **Müllner, Erwin**
**Patentanwälte Dr. Erwin Müllner, Dipl.-Ing. Armin Häupl, Dipl.-Ing. Werner Katschinka Weihburggasse 9**
**A-1010 Wien (AT)**

EP 0 074 940 B1

## Beschreibung

Die Erfindung betrifft einen drahtlosen Telefonapparat sowie einen ortsfesten, ausschließlich dem Telefonapparat — bzw. den funktionell parallelgeschalteten Apparaten eines Teilnehmeranschlusses — zugeordneten Telefonanschlußkasten zur Führung von Gesprächen über das öffentliche Fernsprechnetz, wobei sowohl im Telefonapparat als auch im Telefonanschlußkasten, der unmittelbar am Fernsprechnetz angeschlossen ist, je ein Sender und je ein Empfänger vorgesehen sind, und die Sender Identifizierungssignale zur Verhinderung von Fehlverbindungen austauschen.

In der Nachrichtentechnik sind verschiedene Systeme zur Vermittlung von Gesprächen zwischen zwei Gesprächspartnern bekannt. Weltweit verbreitet sind Fernsprechnetze per Draht. Gespräche per Draht gelten als besonders abhörsicher. Zwischen ortsveränderlichen Stationen verwendet man auch drahtlose Übertragung. Bei einer drahtlosen Übertragung besteht die Möglichkeit des Abhörens ohne großes Risiko für den Abhörenden. Autotelefonanlagen überbrücken die Strecke zwischen dem Fahrzeug und einer Telefonzentrale auf dem Funkweg, wobei in der Telefonzentrale, die mit allen mobilen Teilnehmern in Verbindung treten kann, die Einspeisung in das Telefonnetz erfolgt.

Die Erfindung geht von dem erstgenannten Übertragungssystem aus. Bei einem üblichen Telefonanschluß führt die netzseitige Übertragungsleitung in einen Telefonanschlußkasten, der mit einem Telefonapparat durch ein mehradriges Kabel verbunden ist. In gewissen Grenzen ist die Anordnung bzw. Aufstellung des Telefonapparates flexibel. In erster Linie werden diese Grenzen durch die Länge des Kabels bestimmt. Alternativ dazu hat man auch mehrere Apparatesteckdosen so angeordnet, daß der Aktionsbereich des Telefonapparates vergrößert werden kann. Bei netzgebundenen Anlagen war es jedoch lange Zeit nicht möglich, den Standort des Telefonapparates ganz unabhängig von den Kriterien « Kabellänge und Steckdosenposition » frei zu wählen. Die modernste Ausbaustufe des netzgebundenen Fernsprechsystems sieht vor, daß die Übertragungsstrecke im Teilnehmerbereich, also zwischen dem Telefonanschlußkasten und dem Telefonapparat, drahtlos erfolgt. Damit kann der Telefonapparat im Bereich einer Wohnung, eines Büros oder eines Hauses überall dorthin mitgenommen werden, wo man sich für einige Zeit aufhält, um dort Gespräche entgegenzunehmen und selbst Anrufe tätigen zu können. Bekannte Anlagen dieser Art setzen voraus, daß genügend Frequenzen zur Verfügung stehen, um jedem Teilnehmer eine eigene Frequenz (Privatfrequenz) zuordnen zu können. Diese Bedingung kann in der Praxis jedoch nicht erfüllt werden, da nur eine geringe Zahl von Sprechkanälen seitens der Postverwaltung für diesen Zweck freigegeben wird. Das System wäre bereits in kürzester Zeit ausgeschöpft, zumal auch bei geringer Sendeleistung sichergestellt werden müßte, daß etwa im Umkreis von 3 km keine Doppelvergabe einer Frequenz erfolgt. Wenn beispielsweise nur 40 Sprechkanäle zur Verfügung stehen, dann wird klar, daß ein derartiges System im Stadtbereich keinerlei Chancen hätte. Es wäre unvermeidlich, daß ein Ruf mehrere Teilnehmer erreicht und diese bei einem Gespräch mithören könnten. Die Postverwaltungen lassen im Hinblick auf das Fernmeldegeheimnis Systeme dieser Art nicht zu.

In diesem Zusammenhang ist in der Publikation IEEE Vehicular Technology Conference vom 27.-30. März 1979, Seiten 159-162, New York, USA, eine Beschreibung von K. Yamada et al mit dem Titel « 2 GHz-Band cordless telephone system » erschienen. Auch in dieser Publikation wird auf das Problem der geringen zur Verfügung stehende Kanalzahl hingewiesen. Durch Reduzierung der Sendeleistung ist ein Einfluß nur in einem kleinen Umfang möglich. Die Verwendung eines Identifizierungssignals wird bei Überreichweite des Trägersignals vorgeschlagen. Das Identifizierungssignal wird von einer Mobilstation zur Feststation zusammen mit einem Gabelumschaltsignal und in umgekehrter Richtung zusammen mit dem Klingelsignal übertragen. Durch Identifizierungssignale sollen Fehlverbindungen vermieden werden. Darüber hinausgehende Informationen, etwa über den speziellen Aufbau einzelner Stationen, sind dieser Publikation nicht zu entnehmen.

Einen anderen Zweck verfolgen etwa Autotelefonanlagen. Diese Anlagen verfügen über eine oder mehrere Feststationen, denen jeweils eine große Zahl von Mobilstationen in Kraftfahrzeugen zugeordnet sind. Es war dort die Aufgabe zu lösen, einen Anruf, der bei einer Feststation per Draht einlangt, entsprechend der dem Anruf vorangestellten « Adresse » an den richtigen mobilen Empfänger aus der Vielzahl der anwählbaren Teilnehmer weiterzuleiten. In der Feststation wird die per Draht einlangende Adresse im Rahmen der vielen zugeordneten Mobilstationen, mit welchen die Feststation in Verbindung treten kann, in einen der speziellen Adresse entsprechenden Code umgesetzt. Alle Mobilstationen empfangen den Code und vergleichen ihn mit dem stationsfesten Code. Nur eine Mobilstation, die den Code als den eigenen erkennt, schaltet die Verbindung durch. Geräte dieser Art sind, wie in der US-A 3 173 996 beispielsweise beschrieben, mit Sendersuchlaufschaltungen ausgestattet, wodurch eine Vielzahl von Kanälen abgetastet werden kann.

Die bekannten Anlagen der letztgenannten Art betreffen daher ein drahtloses Wählsystem. Die Feststation kann Verbindungen mit sehr vielen Mobilstationen herstellen. Auf Grund des ankommenden Anrufs und dessen Adresse wird der Code zur Auswahl des Empfängers ermittelt.

Bei den Anlagen gemäß der Erfindung bildet der Teilnehmer-Anschlußkasten mit dem drahtlosen Telefonapparat ein funktionell untrennbares Paar. Der Anschlußkasten kann ausschließlich mit dem ihm zugeordneten Telefonapparat in Verbindung treten. Allenfalls können dem Telefonapparat weitere Apparate nebengeordnet werden, die jedoch alle die gleiche Rufnummer besitzen. Eine Auswahlmöglichkeit hinsichtlich des Teilnehmers besteht innerhalb dieser Übertragungsstrecke nicht. Sie wurde schon vor Einlangen des Rufs beim Anschlußkasten im Wählamt getroffen.

Die Erfindung zielt darauf ab, die Doppelbelegung eines der vorhandenen Kanäle zu vermeiden und auszuschließen, daß ein abgehender Anruf über einen benachbarten Anschlußkasten mit dem daran angeschlossenen Gebührenzähler läuft, sowie ferner die Abhörsicherheit zu gewährleisten. Dies wird dadurch erreicht, daß die Sender jeweils eine das oder die Identifizierungssignale bildende Codeeinrichtung zur Übertragung eines Codes auf einem vom zugeordneten Empfänger als frei erkannten Kanal aufweisen, wobei der Code jedes Senders gerätefest und von der gewählten Anschlußnummer eines Fernsprechteilnehmers unabhängig, ist, daß die Empfänger eine Sendersuchlaufeinrichtung mit Unterscheidung zwischen freien und belegten Kanälen an einer Anzahl von vorgegebenen Übertragungskanälen oder Übertragungskanalpaaren aufweisen und daß dem Empfängern jeweils eine Vergleichsschaltung zur Erfassung und zum Vergleich des übermittelten, invarianten Codes mit dem empfängerseitigen Code nachgeschaltet ist, sowie jeweils eine Schaltung zum Durchschalten der drahtlosen Verbindung bei Codeübereinstimmung in der Vergleichsschaltung, insbesondere auf Duplexbetrieb, zwischen Telefonapparat und Telefonanschlußkasten vorgesehen ist. Durch diese Schaltungsanordnung wird verhindert, daß jedem Telefonapparat zusammen mit seinem zugeordneten Telefonanschlußkasten eine fixe Sende- und Empfangsfrequenz zugeordnet werden muß. Soll ein Anruf an den Telefonapparat drahtlos weitergegeben werden, dann belegt der Sender im zugeordneten Telefonanschlußkasten einen vom zugehörigen scannenden Empfänger als frei erkannten Kanal und sendet einen Code aus. Der Empfänger im Telefonapparat arbeitet ständig mit Sendersuchlauf (Scannerbetrieb), erfaßt nacheinander jeden belegten Kanal und stellt fest, ob der ihm eigene Code (z. B. 15 Bit-Code) anliegt. Ist dies der Fall, dann wird diesem oder einem anderen Code zum Anschlußkasten rückbestätigt und die drahtlose Duplexverbindung auf dem Kanal bis in das Fernsprechnetz durchgeschaltet und der Anruf an den Telefonapparat geleitet.

Soll umgekehrt ein Gespräch vom drahtlosen Telefonapparat aus geführt werden, dann wird vom Sender des Telefonapparates ein durch den eigenen scannenden Empfänger als frei erkannter Kanal belegt und der Code gesendet. Auch der Empfänger im Telefonanschlußkasten arbeitet ständig mit Sendersuchlauf (Scannerbetrieb). Er stellt über die Verleichsschaltung Übereinstimmung mit dem Fest eingespeicherten Code fest, worauf die Rückbestätigung mit diesem oder einem anderen Code erfolgt und die Verbindung bis ins Fernsprechnetz durchgeschaltet wird. Die Leistung der Sender ist ausreichend, um einen Bereich von z. B. 50 m zu erfassen. Überschneidungen mit Nachbaranlagen können nicht zu Fehlverbindungen führen, da die vorgenommene Codierung eines als frei erkannten Kanals bei einem 15 Bit-Code mindestens 30 000 Unterscheidungen innerhalb des ohnehin beschränkten Senderbereiches zuläßt.

Der Anschlußkasten gemäß der Erfindung ist also etwa mit einem Relais ohne eigene Intelligenz vergleichbar, während eine Feststation beim Stand der Technik mit einem Wählamt verglichen werden kann. Die erfindungsgemäße « Feststation » (= Anschlußkasten) bildet den Hausanschluß, der nur einer einzigen durchgeschalteten Rufnummer zugeordnet ist. Das erfindungsgemäße Paar, nämlich Anschlußkasten und zugeordneter Telefonapparat wird nicht so wie beim Stand der Technik über einen Wählvorgang im Anschlußkasten drahtlos zusammengeschlossen. Es ist infolge des senderfesten Codes sowohl im Anschlußkasten als auch im Telefonapparat zwangsläufig aneinander gekettet.

Eine Erhöhung der Sicherheit kann dadurch erreicht werden, daß der Sender des Telefonanschlußkastens und der Empfänger des Telefonapparates einerseits und der Sender des Telefonapparates und der Empfänger des Telefonanschlußkastens anderseits paarweise übereinstimmenden Code jedoch von Paar zu Paar unterschiedlichen Code aufweisen.

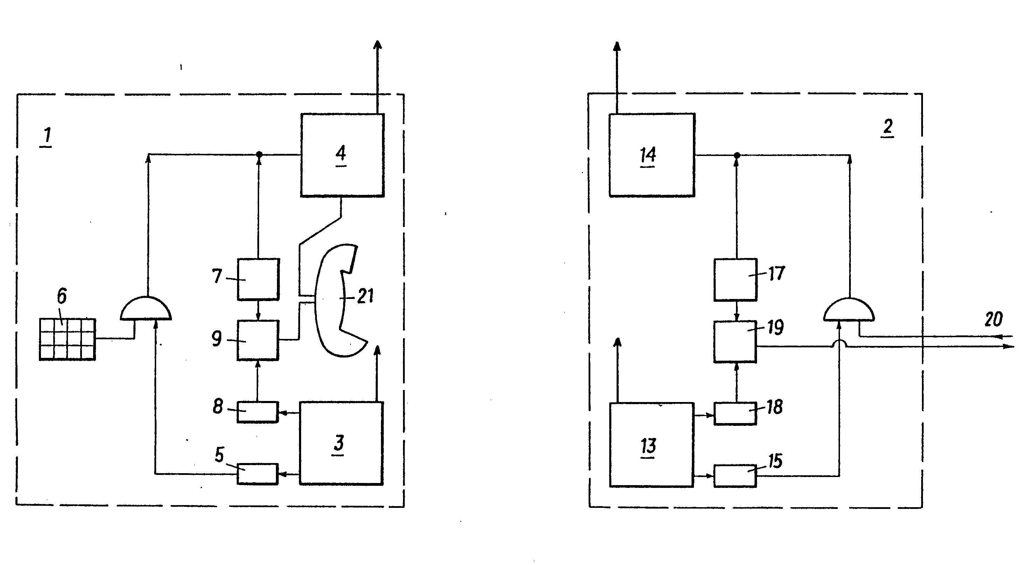

Ein Prinzipschaltbild einer erfindungsgemäße Einrichtung ist in der Zeichnung dargestellt.

Zwischen einem drahtlosen Telefonapparat 1 und einem Telefonanschlußkasten 2 stehen beispielsweise 40 Übertragungskanäle zur Verfügung. Der Telefonapparat 1 verfügt über einen Empfänger 3 mit Sendersuchlauf sowie einen Sender 4. Im Empfänger 3 werden ständig (allenfalls in vorgegebenen Zeitintervallen) die Übertragungskanäle abgetastet. Es wird nach freien und belegten Kanälen unterschieden. Am Ausgang 5 des Empfängers 3 liegt die Information über freie Kanäle.

Wird ein Tastenfeld 6 betätigt, dann wird der Sender 4 und der Empfänger 3 auf ein freies Kanalpaar aufgeschaltet. Vorerst strahlt der Sender 4 einen von einer Codiereinrichtung 7 zugeleiteten Code, der das Identifizierungssignal darstellt, auf dem freien Kanal aus.

Im Telefonanschlußkasten 2 ist ebenfalls ein Empfänger 13 mit Sendersuchlauf vorgesehen. Dieser erfaßt alle belegten Kanäle (Ausgang 18). In einer nachgeschalteten Vergleichsschaltung 19 wird festgestellt, ob der übertragene Code mit dem Code der Codiereinrichtung 17 des Empfängers 13 übereinstimmt. Wird der Code als richtig erkannt, so erfolgt eine Quittierung (« shake hands ») vom Anschlußkasten 2 zum Telefonapparat 1, indem der Code des Senders 14 vom Empfänger 3 aufgenommen und verglichen wird. Die Verbindung wird dann hergestellt und in das Fernsprechnetz 20 durchgeschaltet. Über den Tastenwähler 6 wird ein Teilnehmer angewählt und das Gespräch vom drahtlosen Telefonapparat aus geführt. Das Wählen hat auf die drahtlose Verbindung und den Code keinerlei Einfluß.

Gelangt umgekehrt ein Anruf aus dem Fernsprechnetz bis zum Telefonanschlußkasten 2, dann wird vorerst die Information über einen vom Empfänger 13 als frei erkannten Kanal über den Ausgang 15 an den Sender 14 weitergegeben. Der Sender 14 strahlt den von der Codierschaltung 17 gespeicherten senderseitigen festen Code aus. Der ständig mit Sendersuchlauf arbeitende Empfänger 3 des Telefonapparates 1 legt nacheinander alle Signale der besetzten Kanäle an den Ausgang 8, an den eine Vergleichsschaltung 9 angeschlossen ist. Durch Vergleich mit dem empfängerseitigen Code aus der Codeschaltung 7 wird der über den Sender 14 hereinkommende Verbindungswunsch identifiziert bzw. aus der Summe der auf verschiedenen Kanälen ankommenden Signale herausgefunden. Daraufhin strahlt der Sender 4 seinen Code, der mit dem übermittelten Code übereinstimmen kann, aus. Der gegenüberliegende Empfänger 13 nimmt den Code auf und vergleicht ihn mit dem empfängerseitig eingespeicherten Code. Er stellt Übereinstimmung fest. Damit ist die Quittierung (« shake hands ») erfolgt, die Schleife zum Wählamt wird geschlossen und das Gespräch über die drahtlose Verbindung durchgeschaltet. Sender 14 und Empfänger 3 sowie Sender 4 und Empfänger 13 arbeiten paarweise mit jeweils einem festen Code. Es können beide Paare den gleichen Code verarbeiten oder auch nur paarweise gleich codiert sein. Das wesentliche liegt darin, daß der Code invariant ist, woraus sich die funktionelle Einheit von Anschlußkasten und Telefonapparat ergibt.

Werden von den Empfängern 3 und 13 Signale von benachbarten Anlagen aufgenommen, dann besteht keine Gefahr, daß diese vom Empfänger weitergeleitet werden, da durch die Codierung, Identifizierung und Qittierung die Auslese erfolgt. Das Fernsprechgeheimnis bleibt also gewahrt.

Umgekehrt ist es auch nicht möglich, von einem Telefonapparat in einen fremden Telefonanschlußkasten zu gelangen und über dessen Gebührenzähler ein Gespräch abzuwickeln.

Für Vollduplexbetrieb stehen 40 Kanalpaare zur Verfügung. Es gelten die obigen Ausführungen sinngemäß. Mit einem Empfangskanal, der von den Empfängern 3 bzw. 13 als frei oder belegt erkannt wird, ist immer ein Sendekanal verbunden. Die Anlage arbeitet im 900 MHz-Band, der Frequenzabstand der Kanalpaare beträgt 45 MHz. Die Sendeleistung von 10 mW ist für Distanzen zwischen Telefonapparat 1 und Telefonanschlußkasten 2 bis etwa 50 m ausreichend. Sie ermöglicht es, daß mit 40 Kanälen das Auslangen gefunden werden kann.

Um den einzelnen Kanälen im Telefonapparat 1 und im Telefonanschlußkasten 2 nicht jeweils einen individuellen Quarz zuordnen zu müssen, kann die Frequenzaufbereitung im Synthesizerprinzip mittels Phase-Locked-Loop (PLL) durchgeführt werden. Dabei wird das Signal eines freischwingenden Oszillators (VCO) in einer Phasenvergleichsschaltung mit einem quarzstabilen Referenzsignal verglichen. Das entstehende Gleichstromkorrektursignal dient der Nachregelung der VCO-Frequenz auf die Sollfrequenz und gleichzeitig der Kanalwahl bzw. Kanalfortschaltung. Zu diesem Zweck wird das VCO-Signal (f = 70 MHz) zunächst auf eine Frequenz von etwa 1 MHz gemischt und dann mittels eines programmierbaren Teilers auf die Schrittfrequenz hinuntergeteilt. Durch Umschalten des Teilerverhältnisses kann jede Kanalfrequenz eingestellt werden. Zur Realisierung des automatischen Suchlaufes muß also nur der veränderbare Teiler durch eine logische Ablaufsteuerung programmiert werden.

Das stabilisierte VCO-Signal wird über je einen Pufferverstärker einerseits dem Empfänger-Vervielfacher, anderseits dem Sendemischer zugeführt. Das Ausgangssignal des Empfänger-Vervielfachers (zirka 850 MHz) wird mittels eines mehrpoligen Leitungsfilters von den unerwünschten Spektralanteilen befreit und dem 1. Empfängermischer zugeführt.

Der Steuersender ist quarzstabilisiert und arbeitet auf einer Frequenz von zirka 80 MHz. Das Oszillatorsignal wird in einem Phasenmodulator mit der im Modulationsverstärker aufbereiteten Information beaufschlagt.

Danach wird das modulierte Signal im Sendemischer mit dem VCO-Signal gemischt, die Summenfrequenz ausgefiltert und im Sender-Vervielfacher (x 6) auf die Sender-Nominalfrequenz (zirka 900 MHz) gebracht. Nach Verstärkung in der Endstufe stehen + 10 dBm Sendeleistung zur Verfügung. Sowohl am Antennenausgang als auch nach dem Sender-Vervielfacher ist ein Bandfilter notwendig, um unerwünschte Frequenzen möglichst gut zu unterdrücken. Auf Grund der hohen Betriebsfrequenz kommen hierfür nur sogenannte « Helixfilter » in Frage, da nur mit dieser Art von Filtern die nötige Kreisgüte bei gleichzeitig kleinen Abmessungen und geringer Durchgangsdämpfung sowie hoher Selektion erzielt werden kann. Nachteilig ist der hohe feinmechanische Aufwand bei der Herstellung solcher Filter, anderseits wird jedoch ein Optimum an Störsicherheit (Oberwellen, Spiegelfrequenzen) gewährleistet.

Der Empfänger arbeitet nach dem Zweifach-Überlagerungsprinzip. Bei Einfachkonversion müßte die Zwischenfrequenz sehr hoch gewählt werden (100-150 MHz), um Spiegelfrequenzstörungen möglichst zu vermeiden. Die Verstärkung und Demodulation hoher Zwischenfrequenzen stößt jedoch auf Schwierigkeiten (Stabilität, geringerer elektrischer Wirkungsgrad).

Die erste Zwischenfrequenz wurde mit 75 MHz festgelegt, die zweite mit 10,7 MHz. Der Empfänger ist soweit als möglich in hochintegrierter Bauweise ausgeführt.

Nach Vorselektion in einem 2-kreisigen Bandfilter wird der Pegel des Nutzsignales im Vorverstärker angehoben und über ein weiteres Bandfilter dem 1. Mischer angeboten. Der 2. Mischer setzt das 75 MHz Signal auf 10,7 MHz um, dieses wird im Begrenzerverstärker verstärkt, begrenzt, demoduliert und nach Verstärkung im NF-Verstärker dem Hörer zugeführt.

Der Empfänger enthält weiters eine Rauschsperre, deren Anspruchschwelle einstellbar ist. Dadurch wird gewährleistet, daß eine Verbindung nur dann zustandekommt, wenn das Signal-Rausch-Verhältnis (SNR) einen bestimmten Mindestwert überschreitet. Besteht eine Verbindung bereits, so wird nach Unterschreiten des Mindest-SNR die Verbindung noch einige Sekunden aufrecht erhalten. Steigt das SNR während dieser Zeit nicht wieder über den Mindestwert, dann wird die Verbindung getrennt.

**Ansprüche**

1. Drahtloser Telefonapparat sowie ortsfester, ausschließlich dem Telefonapparat bzw. den funktionell parallelgeschalteten Apparaten eines Teilnehmeranschlusses zugeordneter Telefonanschlußkasten zur Führung von Gesprächen über das öffentliche Fernsprechnetz, wobei sowohl im Telefonapparat als auch im Telefonanschlußkasten, der unmittelbar am Fernsprechnetz angeschlossen ist, je ein Sender und je ein Empfänger vorgesehen sind, und die Sender Identifizierungssignale zur Verhinderung von Fehlverbindungen austauschen, dadurch gekennzeichnet, daß die Sender (4, 14) jeweils eine das oder die Identifizierungssignale bildende Codeeinrichtung (7, 17) zur Übertragung eines Codes auf einem vom zugeordneten Empfänger (3, 13) als frei erkannten Kanal aufweisen, wobei der Code jedes Senders (4, 14) gerätefest und von der gewählten Anschlußnummer eines Fernsprechteilnehmers unabhängig ist, daß die Empfänger (3, 13) eine Sendersuchlaufeinrichtung mit Unterscheidung zwischen freien und belegten Kanälen aus einer Anzahl von vorgegebenen Übertragungskanälen oder Übertragungskanalpaaren aufweisen und daß den Empfängern (3, 13) jeweils eine Vergleichsschaltung (9, 19) zur Erfassung und zum Vergleich des übermittelten, invarianten Codes mit dem empfängerseitigen Code nachgeschaltet ist, sowie jeweils eine Schaltung zum Durchschalten der drahtlosen Verbindung bei Codeübereinstimmung in der Vergleichsschaltung (9, 19), insbesondere auf Duplexbetrieb, zwischen Telefonapparat und Telefonanschlußkasten vorgesehen ist.

2. Drahtloser Telefonapparat nach Anspruch 1, dadurch gekennzeichnet, daß der Sender (14) des Telefonanschlußkastens (2) und der Empfänger (3) des Telefonapparates (1) einerseits und der Sender (4) des Telefonapparates (1) und der Empfänger (13) des Telefonanschlußkastens (2) anderseits paarweise übereinstimmenden Code jedoch von Paar zu Paar unterschiedlichen Code aufweisen.

**Claims**

1. Cordless telephone set as well as fixed relay station which exclusively corresponds with the telephone set or with telephone sets of one subscriber station connected in parallel, for telephone calls using the public network, said telephone set as well as said relay station, which is directly connected to the telephone network, each comprising a radio transmitter and a radio receiver, and the transmitters exchanging identification signals for avoiding wrong connections, characterized in that the transmitters (4, 14) are provided with a coding device (7, 17) for generating the identification signal or -signals in order to transmit a code on a channel identified as being idle by the corresponding receiver (3, 13), the code of the transmitters (4, 14) being unvariable and independent from the dialled telephone number of a subscriber station, that the receivers (3, 14) are provided with a scanner for distinguishing between free and busy channels from a plurality of present communication channels or pairs of communication channels respectively, and that a comparator (9, 19) is located after the receivers (3, 13) which seizes the transmitted invariable code and compares it with the receiver-side code, as well as a circuit to establish the cordless connection especially in duplex operation between the telephone set and the telephone relay station in case of code identity detected in the comparator (9, 19) circuit.

2. Cordless telephone set according to claim 1, characterized in that the transmitter (14) of the telephone relay station (2) and the receiver (3) of the telephone set (1) on the one hand and the transmitter (4) of the telephone set (1) and the receiver (13) of the telephone relay station (2) on the other hand are coded with equivalent codes by pairs but with different codes between the pairs.

**Revendications**

1. Appareil téléphonique sans fil ainsi que coffret de branchement téléphonique adjoint exclusivement à l'appareil téléphonique ou aux appareils montés fonctionnellement en parallèle d'un poste de correspondant, pour le guidage de conversations à travers le réseau téléphonique, un transmetteur et un récepteur étant chaque fois prévus non seulement dans l'appareil téléphonique mais aussi dans le coffret de branchement téléphonique, les transmetteurs échangeant des signaux d'identification pour empêcher de fausses communications, caractérisé en ce que les transmetteurs (4, 14) présentent chacun un dispositif de codage (7, 17) formant le ou les signaux d'identification pour la transmission d'un code à un canal reconnu libre par le récepteur adjoint (3, 13), le code de chaque transmetteur (4, 14) étant solidaire de l'appareil et indépendant du numéro d'appel sélectionné d'un correspondant téléphonique, en ce que les récepteurs (3, 13) présentent un dispositif à marche de détection d'émetteur avec distinction entre canaux libres et occupés parmi un grand nombre de canaux de transmission ou de paires de canaux de transmission prédéterminés, en ce qu'un circuit de comparaison (9, 19) est monté en aval de chacun des récepteurs (3, 13) pour l'interception et la comparaison du code invariant, transmis, avec le code du côté récepteur et en ce qu'il est chaque fois prévu un circuit pour la commutation de la communication sans fil lors de la concordance de code dans le circuit de comparaison (9, 19), en particulier en fonctionnement duplex entre l'appareil téléphonique et le coffret de branchement téléphonique.

2. Appareil téléphonique sans fil suivant la revendication 1, caractérisé en ce que le transmetteur (14) du coffret de branchement téléphonique (2) et le récepteur (3) de l'appareil téléphonique (1), d'une part, et le transmetteur (4) de l'appareil téléphonique (1) et le récepteur (13) du coffret de branchement téléphonique (2), d'autre part, présentent un code qui concorde par paire, mais qui diffère de paire à paire.

0 074 940